# EUROPEAN PATENT APPLICATION

(11) **EP 2 608 046 A1**
(43) Date of publication of application: **26.06.2013**
(21) Application number: 10856140.8
(22) Date of filing: 18.08.2010
(51) Int. Cl.: G06F 13/00, G06F 9/46, G06F 11/30

(54) **COMPUTER MANAGEMENT DEVICE, COMPUTER MANAGEMENT SYSTEM, AND COMPUTER SYSTEM**

(71) Applicant: Fujitsu Limited, Kawasaki-shi, Kanagawa 211-8588 (JP)
(72) Inventor: OKANO Kenji, Sunnyvale, CA 94085 (US)
(74) Representative: HOFFMANN EITLE
(86) International application number: PCT/JP2010/063913
(87) International publication number: WO 2012/023183

(57) **Abstract**

A service processor is separated into a first management unit which performs a primitive processing such as an access processing of hardware and a computer management device which performs a complex processing such as a monitoring of the hardware. And the computer management device is implemented a virtual machine which performs a hardware control of the plurality of hardware. Thereby, the plurality of service processors is realized by a small number of hardware.

## Description

### TECNICAL FIELD

The embodiments discussed herein are related to a computer management apparatus, a computer management system and a computer system.

### BACKGROUND ART

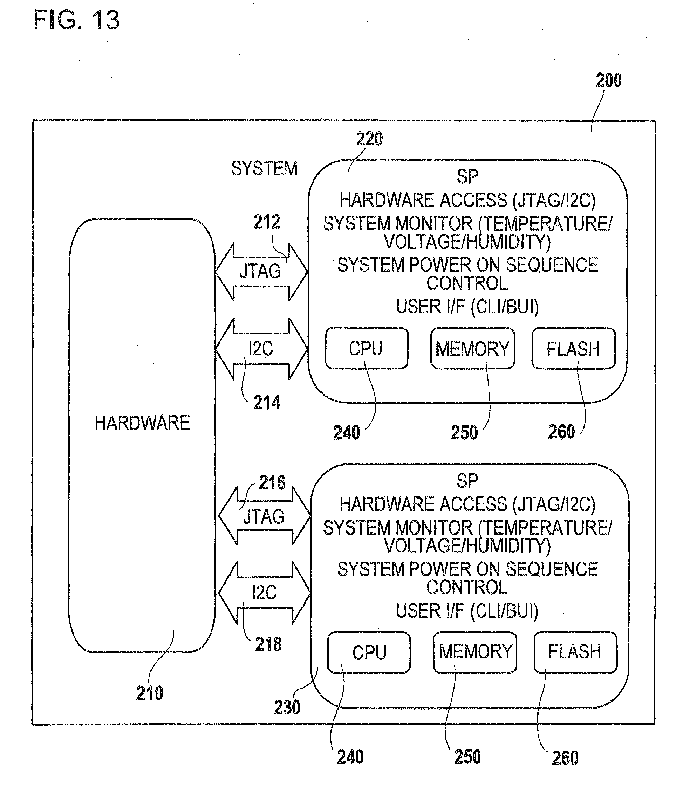

In a computer system, a computer management apparatus (hereinafter referred to as the service processor), which monitors and controls a computer, is provided separately from one or more computers which is a hardware. FIG. 13 is a block diagram of a conventional computer system. As illustrated by FIG. 13, the computer system 200 includes a hardware 210 that performs processing operations, and a pair of service processors 220 and 230 that control the hardware 210.

A pair of the service processors 220 and 230 construct a duplex system, and when one service processor 220 is in a operation state, another service processor 230 is in a standby state. Each of the service processors 220 and 230 has an arithmetic processing unit (CPU: Central Processing Unit) 240, a memory 250 and a nonvolatile memory (Flash Memory) 260.

And each of the service processors 220 and 230 performs functions, such as an access control of the hardware 210, a monitoring of the hardware 210, a power ON of the hardware 210, a collection of logs, and a user interface control (user I/F).

The service processor 220 performs access control of the hardware 210 via control lines 212, 214. In addition, the service processor 230 performs the access control of the hardware 210 via control lines 216, 218. The access control is performed by using signal interfaces of JTAG (Joint Test Action Group) standard and I2C (Inter-Integrated Circuit) standard, for example.

The user interface control performs controls CLI (Command Line Interface), BUI (Browser User Interface), for example, between the user's terminal device. As described above, in order to achieve various functions, single service processor 220, 230 has all functions and allows many operations alone.

### [Related art]

Japanese Laid-open Patent Publication No. 2009-239374,
Japanese Laid-open Patent Publication No. 2004-086522,
Japanese Laid-open Patent Publication No. 2004-318878

### SUMMARY OF THE INVENTION

### BRIEF SUMMARY OF THE INVENTION

With a high functionality of the service processor 220, 230, a high-performance CPU, a large-capacity memory, and a non-volatile memory are desired for a hardware in the service processor 220, 230. Also, software for realizing functions becomes a large size and a complex due to the high functionality. For this reason, the service processor is desired to mount with a complex and expensive hardware. Further, in order to ensure a reliability of the service processor, the service processor also is desired to construct duplicated manner.

In this way, due to the higher functions of the service processor, since the hardware amount of the service processor increases, costs will increase, while the hardware failure rate increases. In addition, the service processor of the standby system had prepared the same hardware as the service processor of the active system despite that the service processor of the standby system almost does not work. Therefore, by duplicating the service processors, the cost of the service processor becomes double.

When the service processor is duplicated, the cost goes up. However, in a high-end machine that is constructed by a large-scale computer, by multiplexing the service processor for making reliability as much, the machine ensures the reliability. On the other hand, in a mid-range machine which is constructed by a midsize computer and a low-end machine which is constructed by a small size computer, a multiplex of the service processor is given up for making cost as much, and the machine has low reliability. When the service processor is not duplicated, there is an effect of cessation of business by exchanging service processor in the event of a failure of the service processor.

The object of the invention is to provide a computer management apparatus, a computer management system and a computer system to improve the reliability of the function at low cost.

### MEANS FOR SOLVING THE PROBLEMS

According to an aspect of the embodiments, a computer management apparatus to manage a plurality of computer system, includes a network communication circuit which is provided to each of the computer system and has a function to access a hardware of the computer system and a function to connect to a plurality of first management units having a network function via a network and a second management unit which is constructed by a virtual computer machine and performs an instruction of the hardware to each of the first management units via the network communication circuit, and performs a monitoring and control of the hardware of the computer as a service processor.

Further, according to another aspect of the embodiments, a computer management system which manage a plurality of computer system, includes a plurality of first management units of which each is provided to each of the computer system and has a function to access a hardware of the computer system and a function to perform a network communication, and a computer management apparatus which has a network communication circuit to connect to the plurality of first management units and a second management unit which is constructed by a virtual computer machine and performs an instruction of the hardware to each of the first management units via the network communication circuit, and performs a monitoring and control of the hardware of the computer as a service processor.

In addition, according to the other aspect of the embodiments, a computer system includes a plurality of computers having a plurality of first management units of which each is provided to each of the computer system and has a function to access a hardware of the computer system and a function to perform a network communication, and a computer management apparatus which has a network communication circuit to connect to the plurality of first management units and a second management unit which is constructed by a virtual computer machine and performs an instruction of the hardware to each of the first management units via the network communication circuit, and performs a monitoring and control of the hardware of the computer as a service processor.

### EFFECT OF THE INVENTION

The service processor is separated into the first management unit which performs a primitive processing such as an access processing of the hardware and a computer management device which performs a complex processing such as a monitoring of the hardware, and the computer management device is implemented a virtual machine which performs a hardware control of the plurality of hardware. Thereby, the plurality of service processors is realized by a small number of hardware. Therefore, it is possible to reduce the cost of a CPU, a memory and a storage device, etc. which is necessary to the service processor. Further, since the first management unit is provided to each system, it is possible to prevent a delay of exchanging of the control signal with the hardware, and it is possible to prevent a reduction in processing speed of the service processor. Furthermore, since the computer management device is implemented the virtual machine, it is possible to use the software for the service processor on the same architecture over a long period of time without having awareness of the hardware of the computer management device.

### BRIEF DESCRIPTION OF DRAWINGS

FIG. 1 is a block diagram of a computer system according to an embodiment;
FIG. 2 is a block diagram of a hardware in FIG. 1;
FIG. 3 is a block diagram of a computer management system illustrated in FIG. 1;
FIG. 4 is a block diagram of a virtual machine of the computer management apparatus in FIG. 3;
FIG. 5 is a functional block diagram of the computer management system in FIG. 3;
FIG. 6 is a diagram for explaining an operation of a first management unit in FIG. 5;
FIG. 7 is a diagram for explaining an operation of the computer management device in FIG. 5;
FIG. 8 is a process flow diagram of a hardware control in FIG. 1 to FIG. 7;
FIG. 9 is a block diagram of the computer system according to a second embodiment;
FIG. 10 is a block diagram of the computer system according to a third embodiment;
FIG. 11 is a block diagram of the computer system according to a fourth embodiment;
FIG. 12 is a block diagram of the computer system according to a fifth embodiment; and
FIG. 13 is a block diagram of a conventional computer management apparatus.

### MODE FOR CARRYING OUT THE INVENTION

Hereinafter, embodiments will be described in the order of a first embodiment of a computer system, a first embodiment of a computer management system, a computer management apparatus, a second embodiment of the computer system, a third embodiment of the computer system, a fourth embodiment of the computer system, a fifth embodiment of the computer system and other embodiments. However, the computer system, the computer control system and the computer management system are not limited to the embodiments.

### (First embodiment of a computer system)

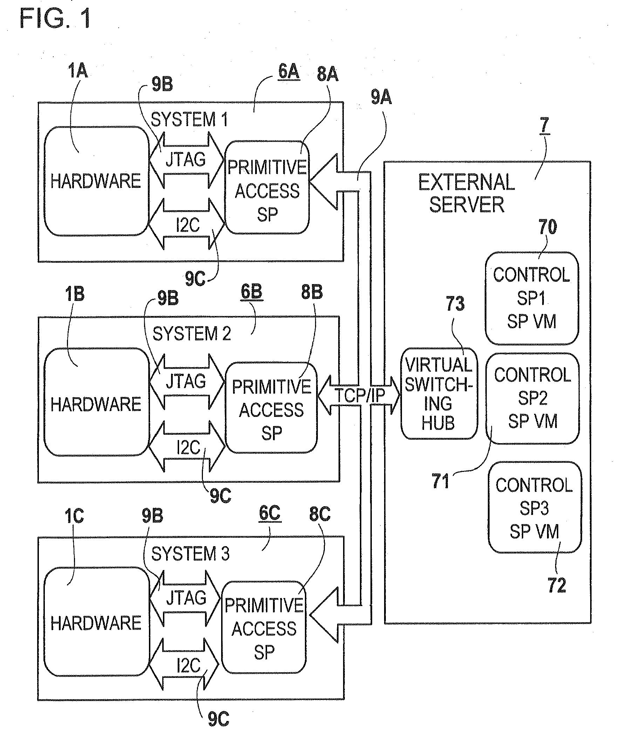

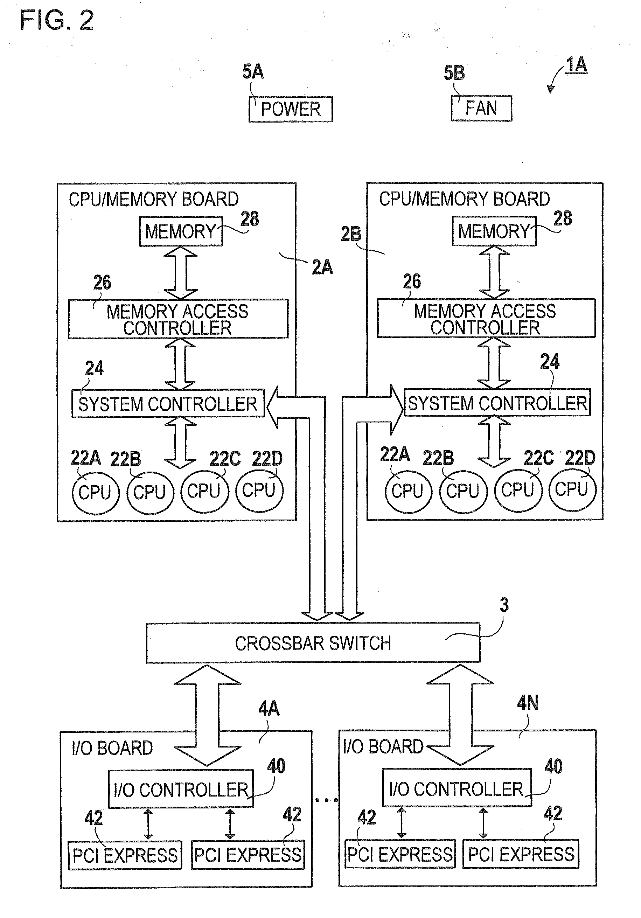

FIG. 1 is a block diagram of the computer system according to an embodiment. FIG. 2 is a block diagram of the hardware in FIG. 1. In the computer system illustrated by FIG. 1, a single computer management apparatus 7 manages three computer systems 6A, 6B, 6C, for example. As depicted by FIG. 1, the computer system has a plurality of computer systems 6A, 6B and 6C, and a computer management device (in FIG. 1, referred to as the external server) 7.

Each of the computer systems 6A, 6B and 6C has a hardware 1A, 1B and 1C as described later in FIG. 2 and a first management unit 8A, 8B and 8C (in FIG. 1, referred to as Primitive Access SP). The first management units 8A, 8B and 8C are connected to the hardware 1A, 1B and 1C via a I2C (Inter Integrated Circuit) signal line 9C and a JTAG (Joint Test Action Group) signal line 9B.

Further, the first management units 8A, 8B and 8C connects to the computer management apparatus 7 via the network 9A using TCP (Transmission Control Protocol) / IP (Internet Protocol). The first management devices 8A, 8B and 8C performs a processing of a primitive row command which is a control signal of the I2C and the JTAG for the hardware 1A, 1B and 1C via the signal lines 9B and 9C and performs a network processing with the computer management apparatus 7.

On the other hand, the computer management apparatus 7 performs the network communication with the first management unit 8A, 8B and 8C and performs monitoring processing of the hardware 1A, 1B and 1C, the hardware control, the processing of the log information, and a user interface process.

That is, the service processor is separated into the first management units 8A, 8B and 8C which perform the primitive processing such as an access processing of the hardware and the computer management device 7 which performs a complex processing such as a monitoring of the hardware. The first management devices 8A, 8B, 8C connects and communicates to and with the computer management apparatus 7 by a network 9A of the TCP / IP. The first management units 8A, 8B, and 8C which access the hardware are constructed by a different hardware from the computer management device 7 which performs the complex processing such as the monitoring, the hardware control, the processing of log information, a user interface.

In addition, the computer management apparatus 7 is constructed by a virtual machine. In other words, the computer management apparatus 7 includes a virtual switching hub 73 and virtual control SP (service processors) 70, 71, 72 which control each of the hardware. A first virtual control SP 70 controls the hardware of the first hardware 1A, and a second virtual SP 71 controls the hardware of the second hardware 1B, and a third virtual control SP 72 controls hardware of the third hardware 1C.

The hardware in FIG. 1 will be described using FIG. 2. In FIG. 2, same elements as that depicted by FIG. 1 are indicated by same symbols. As depicted by FIG. 2, the hardware 1A has a CPU / memory boards 2A, 2B, a crossbar switch 3, I / O boards 4A ∼ 4N, a power supply circuit 5A, and a cooling fan unit 5B. Each of the CPU / memory boards (hereinafter referred to as system board) 2A and 2B, has a plurality of arithmetic processing units (CPU: Central Processing Unit) 22A, 22B, 22C, 22D, a system controller 24, a memory access controller 26 and a host memory 28. In the example, four arithmetic processing unit (hereinafter referred to as CPU) are provided in each of the system board 2A and 2B. The number of CPU installed in each of the system board 2A and 2B may be one or the other plural.

Each of the CPU 22A ∼ 22D connects to the system controller 24. The system controller 24 connects to the memory access controller 26 which is connected to the host memory 28. The system controller 24 connects to a plurality of I/O (Input / Output) boards 4A ∼ 4N through the crossbar switch 3.

Each of the I / O boards 4A ∼ 4N has a I / O controller 40 and a plurality of PCI (Peripheral Component Interconnect) Express slots 42. An external memory (a high-capacity memory or storage device) and a network interface card (NIC) are connected to the PCI Express slot 42. The system controller 24 controls transferring between the CPUs 22A ∼ 22D and the memory access controller 26 and between the crossbar switch 3 and the CPUs 22A ∼ 22D and the memory access controller 26. The crossbar switch 3 directly connects the system boards 2A and 2B to the I / O boards 4A ∼ 4N with one by one.

By the crossbar switch 3, data transfer between the system boards 2A and 2B and between the system boards 2A, 2B and the I/O boards 4A ∼ 4N can be speed up. In the example of FIG. 2, the information processing system has been mounted two system boards, but it is desirable that several tens of the system boards are mounted.

In addition, the hardware 1B and 1C are constructed by a similar configuration. As depicted by FIG. 1, the first management device 8A, 8B and 8C is provided to each of the hardware 1A, 1B, 1C. And the computer management apparatus 7 connects to each of the first management device 8A, 8B and 8C via a network 9A. It is desirable to use LAN (Local Area Network) as the network 9A, for example. In addition, although not represented by FIG. 1, a terminal device connects to the computer management apparatus 7, and instructs the control sequence of the hardware to the computer management apparatus 7 by a operation of a user, and obtains the status. Preferably, the terminal device is constructed by a personal computer.

In this way, the service processor is separated into the first management unit 8A, 8B, 8C which performs a primitive processing such as an access processing of the hardware and a computer management device 7 which performs a complex processing such as a monitoring of the hardware, and the computer management device 7 is implemented a virtual machine which performs a hardware control of the plurality of hardware. Thereby, the plurality of service processors is realized by a small number of hardware. Therefore, it is possible to reduce the cost of a CPU, a memory and a storage device, etc. which is necessary to the service processor.

Furthor, since the first management unit is provided to each system, it is possible to prevent a delay of exchanging of the control signal with the hardware, and it is possible to prevent a reduction in processing speed of the service processor. Furthermore, since the computer management device is implemented the virtual machine, it is possible to use the software for the service processor on the same architecture over a long period of time without having awareness of the hardware of the computer management device.

### (Computer management system)

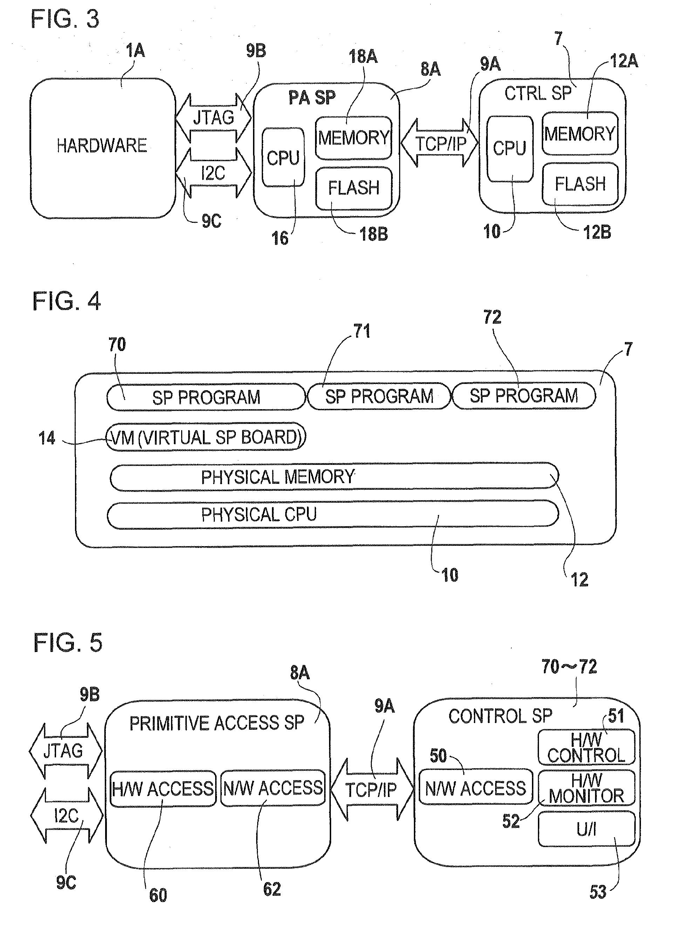

FIG. 3 is a block diagram of the computer management system in FIG. 1. FIG. 4 is a block diagram of the computer management device in FIG.3. In FIG. 3 and FIG. 4, same elements as that depicted by FIG. 1 are indicated by same symbols. In addition, in FIG. 3, for simplicity of explanation, an example will be described by the single hardware 1A and single first management device 8A.

As depicted by FIG. 3, the first management device 8A has a CPU 16, a memory 18A and a nonvolatile memory (Flash Memory) 18B. Further, the computer management device 7 includes a CPU 10, a memory 12A and a nonvolatile memory (Flash Memory) 12B. Since the first management device 8A performs simple processing, the first management device 8A can be constructed by a relatively small hardware. For example, the first management device 8A is constructed by the CPU16 of 120MHz, the memory 18A of 32MB, and the non-volatile memory 18B of 16MB. In addition, because the computer management device 7 performs the complex process, the computer management device 7 requires a relatively large hardware. The computer management device 7, for example, is constructed by the CPU 10 of 533MHz, the memory 12A of 512MB, and the non-volatile memory 12B of 512MB.

As represented by FIG. 4, the computer management device 7 is constructed by a virtual machine. The computer management device 7 is provided a first service processor program 70, a second service processor program 71, a third service processor program 72 and a VM (Virtual Machine, Virtual SP Board) program between the physical memory 12 (12A, 12B) and the physical CPU 10 as described in FIG. 3.

The VM 14 is a program that virtualizes the hardware. That is, the service processor program 70, 71 and 72 is built on a virtual machine (VM) that virtualized the hardware in the computer management apparatus 7. Therefore, the first, the second and the third service processor program 70 ∼ 72 controls the hardware such as the physical CPU 10 and the physical memory 12 (12A, 12B) through the VM 14. Therefore, in a virtual machine, it is possible that a plurality of service processor programs operate independently on single hardware.

Thus, by constructing a virtual machine on the computer management device (server) 7 which is provided outside of the computer system and mounting service processor software on the virtual machine, it is possible to execute processing of a plurality of system by single hardware. Therefore, it is possible to reduce the cost of the computer management device. In particular, because the unit price per capacity drops when the memory and the disk device become a large capacity, it is possible to significantly reduce the hardware cost. For example, in order to allocate 4 GB memory space, the use of single flash memory of 4GB contributes a cost rather than the use of eight flash memories of 512MB.

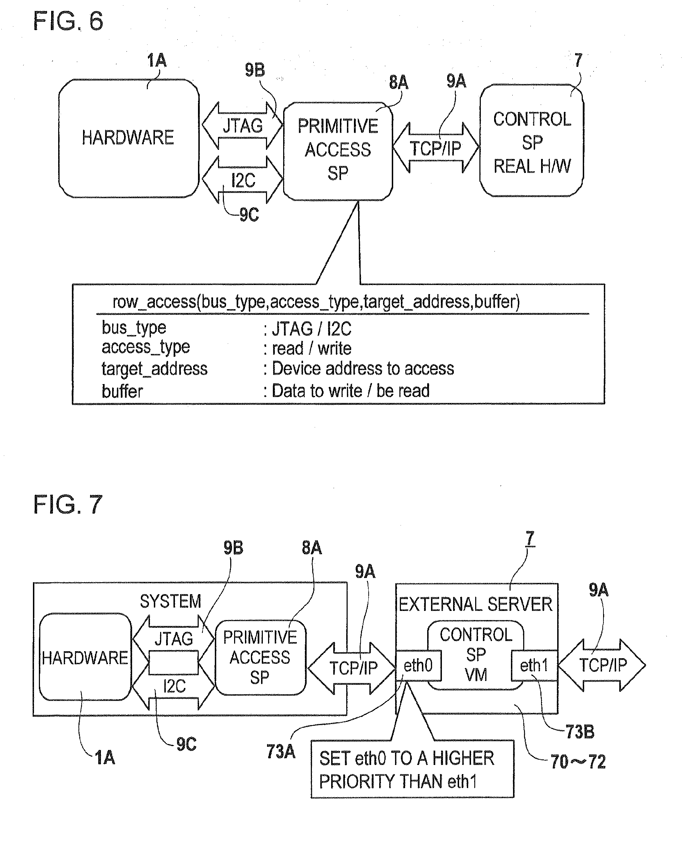

FIG. 5 is a functional block diagram of the computer management system in FIG. 3. FIG. 6 is a diagram for explaining the operation of the computer management device in FIG. 5. FIG. 7 is an explanatory diagram of the priority processing of the computer management device in FIG. 5. As represented by FIG. 5, the first management device 8A has a hardware (H/W) access function 60 and a network (NW) access function 62, and performs only primitive processing such as a hardware access.

The service processor program 70 ∼ 72 in the computer management device 7 has a network (NW) access function 50, a hardware access function 51, a hardware monitoring function 52 and a user interface function 53. That is, the service processor program 70 ∼ 72 performs the complex processing such as the monitoring of the hardware 1A.

The first management device 8A connects to the computer management device 7 by the network 9A of TCP / IP. And the first management device 8A and the computer management device 7 communicate each other via the network 9A by using two network functions 62 and 50.

As depicted by FIG. 6, the hardware access function 60 in the first management device 8A is a simple interface function for read / write. The interface function designates a bus type (bus_type) whether the interface is the JTAG or the I2C, an access type (access_type) whether the access is a read or a write, an address of the device (target_address), and a buffer for read and write. In addition, the network function 62 has a function of setting of the TCP / IP.

In this way, by dividing the service processor, it is possible to reduce the cost of the hardware of the service processor. On the other hand, in the conventional example that the service processor consists of a single processor, the input by an interrupt was treated with a privilege level of the interrupt handler. In the embodiment, when the first management device 8A received the input by the interrupt handler level, the input in the computer management device 7 is dropped to the priority of the same level as the external communication, since the input will be the level of the TCP / IP communications in the computer management device 7. And when the access load from outside increases in the computer management apparatus 7, if there is a delay in the interrupt processing from the first management device 8A in the computer management device 7, the performance is reduced.

In order to prevent performance degradation, as depicted by FIG. 7, the service processor program 70 ∼ 72 is provided two ports (Ethernet (trade mark) ports) 73A and 73B for each of the first management device 8A and the user interface. The physical computer management device 7 has two physical Ethernet ports and the computer management device 7 which is built in the virtual machine is provided a virtual two Ethernet ports.

And the service processor program 70 ∼ 72 handles an interrupt request queue (IRQ: Interrupt Request Queue) to assign to a first port 73A (eth0) with a higher priority than the IRQ to assign to a second port 73B (eth1). Therefore, even if an interrupt occurred frequently in the second port 73B (eth1) from the user interface, it is possible to be state that the interrupt handler for the first port 73A (eth0) surely works. Thus, even when the load was increased from an external network (eth1), the service processor program 70 ∼ 72 can process preferentially the request processing from the first management device 8A.

In this way, even if the first management device 8A only execute the transfer the interrupts that came up from the hardware 1A to the computer management device 7 by the TCP/IP transmission, the service processor program 70 ∼ 72 can handle the interrupt notification from the first management device 8A with a high priority. In other words, communication process with the first management device 8A is set to the high priority.

In addition, since the computer management device 7 is provided outside of the system, the hardware and software into the system can be small and simplified. For this reason, it is possible to significantly reduce the probability of occurrence of a hardware failure of the computer management device 7. In addition, since the first management device 8A and the computer management apparatus 7 are connected by the TCP/IP, both configuration is easily replaceable.

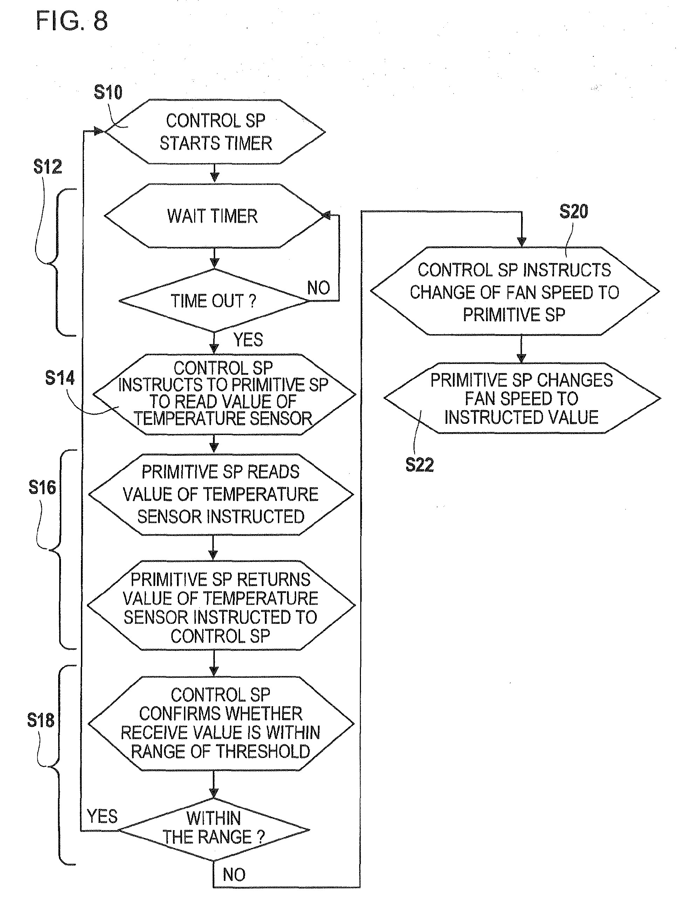

FIG. 8 is a flow diagram of the hardware control process of the computer management apparatus 7 according to the embodiment. FIG. 8 illustrates an example that the hardware monitoring function 52 of the service processor program 70 (in Figure 8, referred to as Control SP, hereinafter referred to as Control SP) in the computer management device 7 controls the cooling fan 5B in the hardware 1A.

(S10) The Control SP 70 in the computer management device 7 starts the timer.

(S12) The Control SP 70 is waiting timer, and determines whether or not is notified a time-out.

(S14) The control SP 70 instructs reading of the temperature sensor to the first management device 8A (In FIG. 8, referred to as Primitive SP, hereinafter referred to as Primitive SP) via the network 9A.

(S16) The primitive SP 8A reads the measured value of the indicated temperature sensor in the hardware 1A, and transfers the value to the control SP 70 through the network 9A. In addition, the temperature sensor is intended to detect the temperature of the hardware depicted by FIG. 2, and is provided in the hardware 1A in FIG. 2.

(S18) The control SP 70 determines whether the received measurement value through the network 9A is within a range of the threshold value. When the received measurement value is within the range of the threshold value, the control SP 70 returns to the step S10.

(S20) When the control SP 70 determines that the received measured value is not within the range of the threshold, the control SP 70 instructs a change of fan speed to the Primitive SP 8A through the network 9A.

(S22) The primitive SP 8A changes the speed of the cooling fan 5B which is instructed.

In this way, the control SP 70 transmits the instruction of the hardware control to the primitive SP 8A through the network 9A, and the primitive SP 8A controls the hardware according to the instruction.

### (Second embodiment of the computer system)

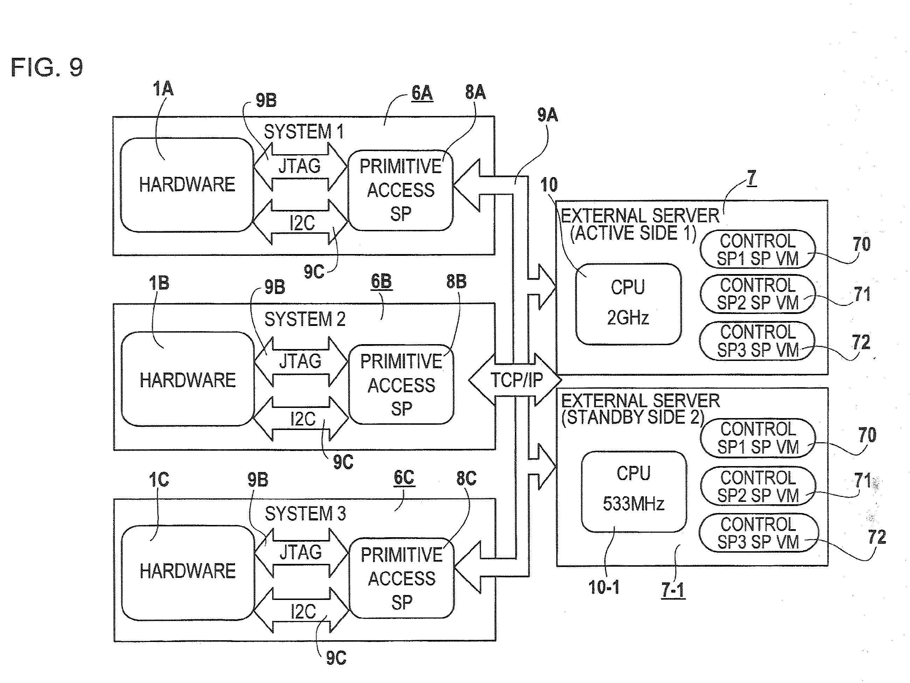

FIG. 9 is a block diagram of the computer system according to a second embodiment. In FIG. 9, same elements as that illustrated by FIG. 1 and FIG. 2, are indicated by same symbols. As represented by FIG. 9, the computer management device 7 is the same as the configuration described in FIG. 1. In FIG. 9, the computer management apparatus 7 is constructed by an external server, and is used for operation (Active) state.

In addition, a second computer management device 7-1 is provided for the standby. The second computer management device 7-1 for standby connects to the first management device 8A, 8B, 8C (referred to as Primitive Access SP in the FIG. 9) provided to each of the systems 6A, 6B, 6C via the network 9A. The second computer management device for standby 7-1 is constructed by the virtual machine. That is, the computer management device for standby 7-1 has the first service processor program 70, the second service processor program 71, the third service processor program 72, and the physical memory (not illustrated in FIG.9) and the physical CPU 10-1. And, as described in FIG. 4, the computer management device for standby 7-1 is provided the VM (virtual machine, virtual SP board) layer (program) 14 between each of the program 70, 71, 72 and the physical memory (not illustrated in FIG.9) and the physical CPU 10-1.

This configuration represents the redundant configuration of the computer management device. In the conventional art, the service processor for standby is physically provided to the service processor for the operation with one by one. However, in practice the standby service processor is not usually little operated, and the hardware resources are not used much. Also, there is a little case when the plurality of hardware requires a service processor for standby side at same time. For this reason, the computer management device for standby 7-1 has the configuration aggregated the plurality of service processors on the virtual machine (VM) that is provided on a small hardware resource. Thus, the computer management device 7-1 for standby can be provided in the event of an emergency.

In example of FIG. 9, because the computer management device for operation 7 is necessary to operate three service processor programs 70, 71, 72 in the three systems which are active, the CPU 10 is required to the performance of about 533MHz x 3, for example. On the other hand, because the computer management device for standby 7-1 is sufficient to operate one service processor program in the event of an emergency, the CPU 10-1 of the computer management device may have the performance of about 533MHz x 1, for example. Similarly, in the computer management apparatus 7-1 for the standby, a memory can be reduced.

In the computer management device for standby 7-1, 533MHz CPU10-1 executes the three service processor programs 70, 71, 72. However, because three service processor programs usually are idle state, there is no problem for the performance. Further, since the plurality of hardware do not become an emergency at the same time, no problem occurs in terms of performance because the computer management apparatus for standby 7-1 has a performance to perform single service processor program when emergency. In addition, by the computer management device for standby 7-1, it is possible to reduce the hardware resource of two computer management apparatus.

### (Third embodiment of a computer system)

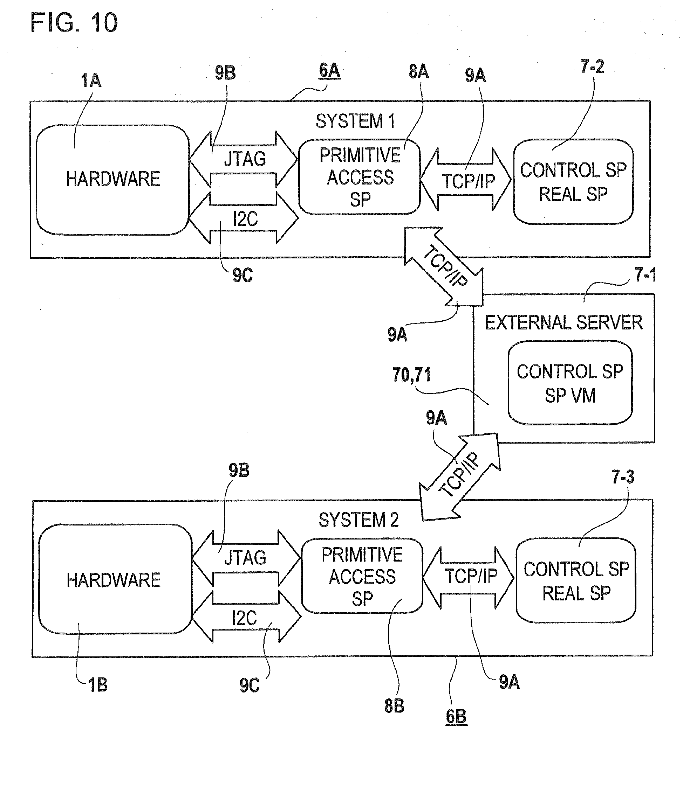

FIG. 10 is a block diagram of the computer system according to a third embodiment. In FIG. 10, same elements as that depicted by FIG. 1, FIG. 2, and FIG. 9, are indicated by same symbols. As represented by FIG. 10, a first system 6A includes the hardware 1A, the first management device 8A, and the computer management device 7-2. The hardware 1A connects to the first management device 8A through the control lines 9B and 9C. The first management device 8A connects to the computer management device 7-2 via the network 9A. The computer management device 7-2 is constructed by an external server and is used for an operation (Active) state. The computer management device 7-2 has not been constructed by the virtual machine and monitors and controls the hardware 1A.

A second system 6B includes the hardware 1B, the first management device 8B and the computer management device 7-3. The hardware 1B connects to the first management device 8B through the control lines 9B and 9C. The first management device 8B connects to the computer management device 7-3 via the network 9A. The computer management device 7-3 is constructed by an external server and is used for an operation (Active) state. The computer management device 7-3 has not been constructed by the virtual machine and monitors and controls the hardware 1B.

In addition, the computer management device 7-1 for standby is provided. The computer management device 7-1 for standby connects to the first management device (referred to as Primitive Access SP in the FIG. 10) 8A and 8B provided in each of systems 6A, 6B via the network 9A. The computer management device 7-1 for standby is constructed by the virtual machine. That is, the computer management device 7-1 for standby has a first service processor program 70, a second service processor program 71, the physical memory (not illustrated in FIG. 10) and the physical CPU physical (not illustrated in FIG. 10). Then, as described in FIG. 4, in the computer management device 7-1 for standby, the VM (virtual machine, virtual SP board) layer (program) 14 is provided between each of programs 70, 71 and the physical memory (not illustrated in FIG. 10) and the physical CPU.

Because the interface (TCP/IP) between the first management device 8A, 8B and the computer management device 7-1, 7-2 is independent to the hardware, as depicted by FIG. 10, the computer management devices for active 7-2, 7-3 are mounted in the housing of the system similar to the prior art, and the computer management device 7-1 for standby which is redundant system is provided outside of the housing and connected to the network. This feature is referred to as the configuration of the hybrid type.

In this way, in the hybrid configuration, it is possible to share the computer management device 7-1 for standby by a plurality of systems, thereby cost can be reduced. In the conventional, in the low-end model with fewer CPUs, there is a problem that the service processor can not be redundant from the issue of cost. On the contrary, by the hybrid configuration, it is possible to reduce the cost of the computer management device 7-1 for standby, and the cost can be reduced to no problem level. Further, as described above, since an event that the computer management device 7-1 for standby is necessary is a little in practice, it is almost no problems in actual operation.

### (Fourth embodiment of a computer system)

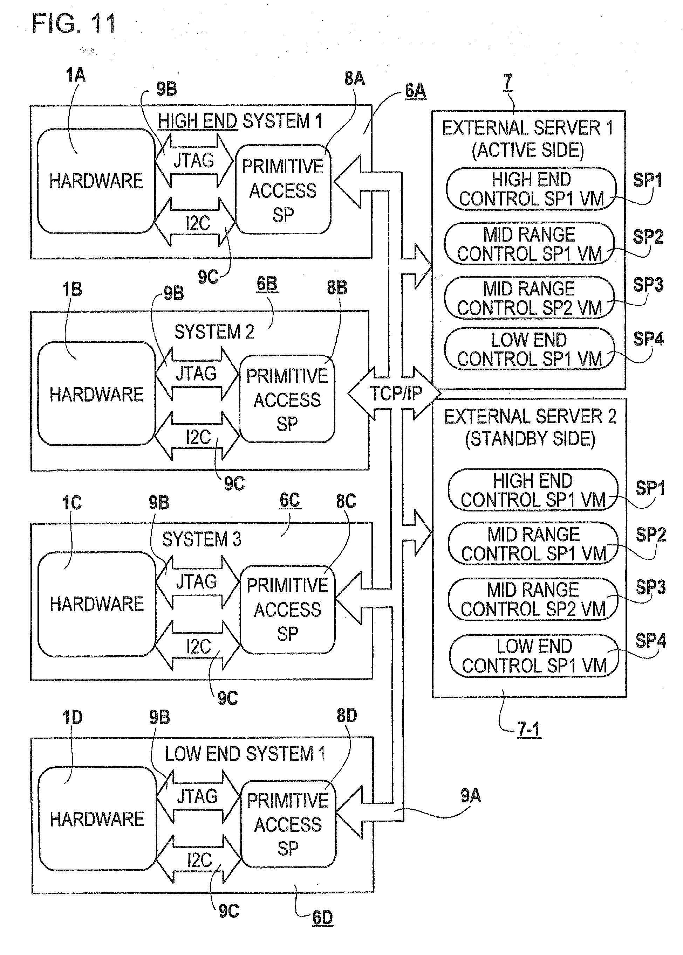

FIG. 11 is a block diagram of the computer system according to a fourth embodiment. In FIG. 11, same elements as that illustrated by FIG. 1, FIG. 2, and FIG. 9, are indicated by same symbols. As illustrated by FIG. 11, the computer management device 7 has same configuration as described in FIG. 1. In FIG. 11, the computer management device 7 is constructed by an external server, and is used for an operation (Active) state.

In a first system 6A, the hardware 1A connects to the first management device 8A via the control lines 9B and 9C. The hardware 1A is constructed by a large-scale computer system. The system is referred to as a high-end system. The first management device 8A connects to the computer management device 7 via the network 9A. The computer management device 7 is constructed by an external server and is used for an operation (Active) state. The computer management device 7 is constructed by the virtual machine and executes the service processor program SP1 for controlling the high-end system, and performs monitoring and control of the hardware 1A.

In second and third systems 6B and 6C the hardware 1B and 1C connect to the first management devices 8B and 8C through the control lines 9B, 9C. The hardware 1B and 1C are constructed by a medium-sized computer system. The system is referred to as a mid-range system. The first management devices 8B and 8C connect to the computer management device 7 via the network 9A. The computer management device 7 executes the service processor programs SP1, SP2 for controlling the mid-range system, and performs monitoring and control of the hardware 1B and 1C.

In a fourth system 6D, the hardware 1D connects to the first management device 8D via the control lines 9B, 9C. The hardware 1D is constructed by a small computer system. The system is referred to as a low-end system. The first management device 8D connects to the computer management device 7 via the network 9A. The computer management device 7 executes the service processor program SP4 for controlling the low-end system, and performs monitoring and control of the hardware 1D.

In this way, even though the hardware configurations are different for each system, since the computer management device 7 is realized by the virtual machine (VM), it is possible to integrate the service processor functions between different models into single external server 7.

In addition, the computer management device 7-1 for standby is provided. The computer management device 7-1 for standby connects to the first management device (referred to as Primitive Access SP in the FIG. 11) 8A, 8B, 8C and 8D provided in each of systems 6A, 6B, 6C and 6D via the network 9A. The computer management device 7-1 for standby is constructed by the virtual machine. That is, the computer management device 7-1 for standby has a first service processor program SP1, a second service processor program SP2, a third service processor program SP3, a fourth service processor program SP4, the physical memory (not illustrated in FIG. 11) and the physical CPU physical (not illustrated in FIG. 11). And, as described in FIG. 4, in the computer management device 7-1 for standby, the VM (virtual machine, virtual SP board) layer (program) 14 is provided between each of programs SP1 ∼ SP4 and the physical memory (not illustrated in FIG. 11) and the physical CPU.

In this way, even though the high-end machine which is constructed by the large-scale computer, the mid-range machine which is constructed by the medium-scale computer and the low end machine that is constructed by the small computer are mixed, it is possible to integrate the computer management device 7-1 for standby into a single external server.

### (Fifth embodiment of a computer system)

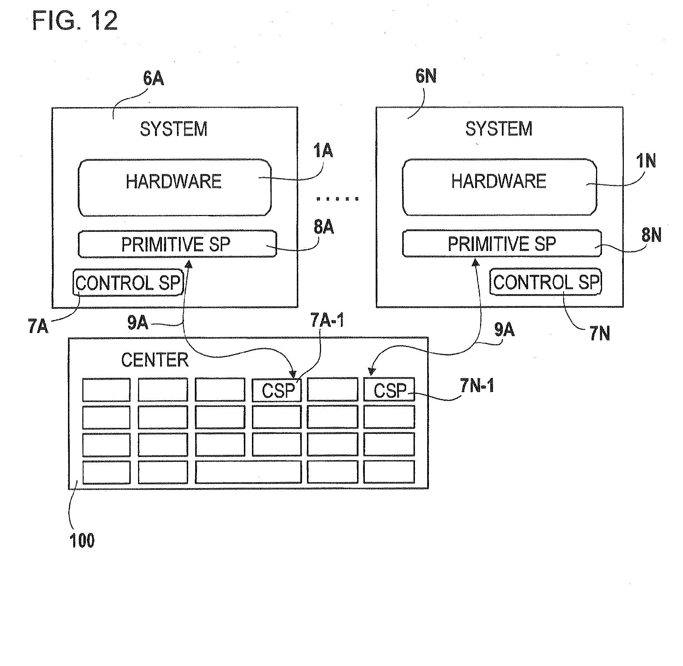

FIG. 12 is a block diagram of the computer system according to a fifth embodiment. In FIG. 12, same elements as that illustrated by FIG. 1, FIG. 2, and FIG. 9, are indicated by same symbols. As represented by FIG. 12, a remote center 100 connects to a plurality (N: N> 1 and is an integer) of the systems 6A ∼ 6N via the network.

A first computer system 6A includes the hardware 1A, the first management device 8A and the computer management device 7A. The hardware 1A connects to the first management device 8A via the control lines 9B and 9C. The first management device 8A connects to the computer management device 7A via the network 9A. The computer management device 7A is used for an operation (Active) state. The computer management device 7A is not constructed by the virtual machine and executes monitoring and control of the hardware 1A.

A nth computer system 6N includes the hardware 1N, the first management device 8N and the computer management device 7N. The hardware 1N connects to the first management device 8N via the control lines 9B and 9C. The first management device 8N connects to the computer management device 7N via the network 9A. The computer management device 7N is used for an operation (Active) state. The computer management device 7N is not constructed by the virtual machine and executes monitoring and control of the hardware 1N.

In addition, functionality of the computer management device for standby is provided to the remote center 100. The remote center 100 connects to the first management device (referred to as Primitive Access SP in FIG. 12) 8A, 8N provided in each of the system 6A, 6N via the network 9A. The remote center 100 is constructed by a virtual machine. That is, the remote center 100 has service processor programs 7A-1 ∼ 7A-N, the physical memory (not illustrated in FIG. 12) and the physical CPU (not illustrated in FIG. 12). And, as described in FIG. 4, in the remote center 100, the VM (virtual machine, virtual SP board) layer (program) 14 is provided between the service processor programs 7A-1 ∼ 7A-N and the physical memory and the physical CPU.

Because the interface (TCP/IP) between the first management device 8A, 8N and the computer management device 7A, 7N is independent to the hardware, as depicted by FIG. 12, the computer management devices for active 7A, 7N are mounted in the housing of the system similar to the prior art. On the contrary, the functionality of the computer management device for standby which is redundant system is provided to the remote center 100 and connected to the network. This feature is a modification of the configuration of the hybrid type.

In this way, it is possible to integrate the functionality of the computer management device for standby into the remote center 100, thereby cost can be reduced. Further, as described above, since an event that the computer management device for standby is necessary is a little in practice, it is almost no problems in actual operation. Because cost benefits increases by aggregating more computer management device for standby, it is possible to provide a computer service which has reliability at low cost.

### (Other embodiments)

In the embodiment of FIG. 10, the example was described that two systems share the computer management device 7-1 for standby. However, three or more systems may share the computer management device 7-1 for standby. In addition, the configuration of the hardware is not limited to the configuration in FIG. 2, and may be applied to other hardware including a CPU, a memory.

The foregoing has described the embodiments of the present invention, but within the scope of the spirit of the present invention, the present invention is able to various modifications, and it is not intended to exclude them from the scope of the present invention.

### INDUSTRIAL APPLICABILITY

The service processor is separated into the first management unit which performs a primitive processing such as an access processing of the hardware and a computer management device which performs a complex processing such as a monitoring of the hardware, and the computer management device is implemented a virtual machine which performs a hardware control of the plurality of hardware. Thereby, the plurality of service processors is realized by a small number of hardware. Therefore, it is possible to reduce the cost of a CPU, a memory and a storage device, etc. which is necessary to the service processor. Further, since the first management unit is provided to each system, it is possible to prevent a delay of exchanging of the control signal with the hardware, and it is possible to prevent a reduction in processing speed of the service processor. Furthermore, since the computer management device is implemented the virtual machine, it is possible to use the software for the service processor on the same architecture over a long period of time without having awareness of the hardware of the computer management device.

**DESCRIPTION OF REFERENCE NUMERALS**

| | |
|---|---|
| 1A, 1B, 1C | Hardware of a computer system, |
| 7, 7-1, 7-2, 7A, 7B and 7C | Computer management device, |
| 6A, 6B, 6C, 6N | Computer system |
| 8A, 8B, 8C | First management device, |
| 9A | Network, |
| 9B, 9C | Control lines, |
| 10 | Physical CPU, |
| 12 | Physical memory, |
| 14 | Virtual Machine, |
| 70-72 | Service Processor program. |

## Claims

1. A computer management apparatus that manages a plurality of computer system, the computer management apparatus comprising:
a network communication circuit that is provided to each of the computer system and has a function to access a hardware of the computer system and a function to connect to a plurality of first management units having a network function via a network; and
a second management unit that is constructed by a virtual computer machine and performs an instruction of the hardware to each of the first management units via the network communication circuit, and performs a monitoring and control of the hardware of the computer system as a service processor.

2. The computer management apparatus according to claim 1, wherein the second management unit transmits the instruction of read for reading a predetermined data by accessing the hardware of the computer system to the first management unit via the network, receives read data from the first management unit based on the instruction of read, and transmits the instruction of write for writing data, which performs control of the hardware in the computer system, based on the read data to the first management unit via the network.

3. The computer management apparatus according to any one of claims 1 and 2, wherein the apparatus further comprises:
a first virtual machine comprising the second management unit that performs the monitoring and the control of the hardware of the computer system in active; and
a second virtual machine that realizes the second management unit in behalf of the first virtual machine when the first virtual machine is failed.

4. The computer management apparatus according to any one of claims 1 to 3, wherein the second management unit implemented by the virtual machine comprises a plurality of network interfaces, and
wherein the second management unit of the plurality of network interfaces to connect the first management device in the computer system via the network communication circuit.

5. The computer management apparatus according to claim 4, wherein the second management unit sets an interrupt from a network interface that is connected to the first management unit in the computer system to a higher priority than a priority of an interrupt from other network interface.

6. The computer management apparatus according to any one of claims 1 to 5, wherein the computer system further comprises a third management unit that performs the monitoring and control of the hardware in the computer system and connects to the first management unit via a network, and
wherein the second management unit, when the third management unit is failed, connects to the first management unit and executes the monitoring and control of the hardware in the computer system in behalf of failed the third management unit.

7. The computer management apparatus according to claim 3, wherein the virtual machine comprises a plurality of the second management units that each is corresponded to each of the plurality of computer systems and manages each of different computer systems.

8. A computer management system that manages a plurality of computer system, the computer management system comprising:
a plurality of first management units that each is provided to each of the computer system and has a function to access a hardware of the computer system and a network function; and
a computer management device that is constructed by a virtual machine and comprising;
a network communication circuit that connects to the plurality of first management units via a network; and
a second management unit that performs an instruction of the hardware to each of the first management units via the network communication circuit, and performs a monitoring and control of the hardware of the computer system as a service processor.

9. The computer management system according to claim 8, wherein the second management unit transmits the instruction of read for reading a predetermined data by accessing the hardware of the computer system to the first management unit via the network, receives read data from the first management unit based on the instruction of read, and transmits the instruction of write for writing data, which performs control of the hardware in the computer system, based on the read data to the first management unit via the network.

10. The computer management system according to any one of claims 8 and 9, wherein the system further comprises:
a first virtual machine comprising the second management unit that performs the monitoring and the control of the hardware of the computer system in active; and
a second virtual machine that realizes the second management unit in behalf of the first virtual machine when the first virtual machine is failed.

11. The computer management system according to any one of claims 8 to 10, wherein the second management unit implemented by the virtual machine comprises a plurality of network interfaces, and
wherein the second management unit selects one of the plurality of network interfaces to connect the first management device in the computer system via the network communication circuit.

12. The computer management system according to claim 11, wherein the second management unit sets an interrupt from a network interface that is connected to the first management unit in the computer system to a higher priority than a priority of an interrupt from other network interface.

13. The computer management system according to any one of claim 8 to 12, wherein the computer system further comprises a third management unit that performs the monitoring and control of the hardware in the computer system and connects to the first management unit via a network, and
wherein the second management unit, when the third management unit is failed, connects to the first management unit and executes the monitoring and control of the hardware in the computer system in behalf of failed the third management unit.

14. The computer management system according to claim 10, wherein the virtual machine comprises a plurality of the second management units that each is provided to each of the plurality of computer systems and manages each of different computer systems.

15. A computer system comprising:
a plurality of computer systems;
a plurality of first management units that each is provided to each of the computer system and has a function to access a hardware of the computer system and a network function; and
a computer management device that is constructed by a virtual machine and comprising;
a network communication circuit that connects to the plurality of first management units via a network; and
a second management unit that performs an instruction of the hardware to each of the first management units via the network communication circuit, and performs a monitoring and control of the hardware of the computer system as a service processor.
